# EUROPÄISCHE PATENTSCHRIFT

(11) **EP 1 595 264 B1**
(45) Veröffentlichungstag und Bekanntmachung des Hinweises auf die Patenterteilung: **19.07.2006**
(21) Anmeldenummer: 04702283.5
(22) Anmeldetag: 15.01.2004
(51) Int. Cl.: G21C 17/06

(54) **VERFAHREN ZUR MESSUNG EINER RELATIVEN GRÖSSE DES ABBRANDES VON BRENNELEMENTEN EINES KUGELHAUFEN-HOCHTEMPERATURREAKTORS (HTR) SOWIE DAZU GEEIGNETE VORRICHTUNG**
METHOD FOR MEASURING THE RELATIVE EXTENT OF BURNOUT OF COMBUSTION ELEMENTS IN A PEBBLE-BED HIGH-TEMPERATURE REACTOR (HTR) AND A CORRESPONDING DEVICE
PROCEDE DE MESURE D'UNE GRANDEUR RELATIVE DE LA COMBUSTION D'ELEMENTS COMBUSTIBLES D'UN REACTEUR HAUTE TEMPERATURE A LIT DE BOULES, ET DISPOSITIF ASSOCIE

(30) Priorität: 18.02.2003 DE 10306648
(43) Veröffentlichungstag der Anmeldung: 16.11.2005
(73) Patentinhaber: Forschungszentrum Jülich GmbH, 52425 Jülich (DE)
(72) Erfinder: POHL, Peter, 52355 Düren (DE)
(86) Internationale Anmeldenummer: PCT/DE2004/000037
(87) Internationale Veröffentlichungsnummer: WO 2004/075205

(56) Entgegenhaltungen:
- US-A- 3 398 280
- US-A- 3 786 256
- US-A- 4 515 749

## Beschreibung

Die Erfindung betrifft ein Messverfahren für Brennelemente, insbesondere ein Messverfahren, mit dessen Hilfe der Abbrand der Brennelemente in einem Kugelhaufen-Hochtemperaturreaktor (HTR) bestimmt werden kann.

### Stand der Technik

Beim Betrieb eines eingefahrenen Kugelhaufen-HTR mit Mehrfachdurchlauf (wie AVR oder THTR) muss ein gewisser Anteil der umgewälzten Brennelemente (BE) aus dem Kreislauf entfernt werden, um Platz zu schaffen für die Zugabe von frischen Brennelementen. Dabei sollen natürlich im Interesse einer guten Spaltstoffökonomie möglichst die am weitesten abgebrannten Brennelemente entnommen werden. Dazu wird jedes einzelne umgewälzte Brennelement einer Messung unterzogen. Gemessen wird dabei eine physikalische Größe, die ein Maß für den Abbrand ist. Wichtig ist dabei im Interesse einer guten Messgenauigkeit nicht unbedingt eine Proportionalität dieser Größe zum Abbrand, sondern ein großer Messeffekt und eine gute Reproduzierbarkeit der Messgröße. Anhand dieser Größe wird festgelegt, ob das Brennelement auf den Reaktorkern zurück gefördert wird, gegebenenfalls auch auf welche Kernzone, oder ob es entnommen wird.

Innerhalb des Reaktorkerns kommt es zu Spaltungsprozessen, bei denen innerhalb der Brennelemente aus dem Spaltstoff Spaltprodukte entstehen. Gelangen einzelne Brennelemente für die Umwälzung aus dem Reaktorkern in das Kugelabzugsrohr, so unterbleiben weitere Spaltungsprozesse. Die innerhalb der Brennelemente vorliegenden Spaltprodukte sind jedoch radioaktiv und senden ihrerseits γ-Strahlung aus. Für verschiedene Brennelemente korreliert die von diesem Brennelement ausgesandte und gemessene gesamte γ-Strahlung unter sonst identischen Bedingungen, beispielsweise nach gleicher Zeit nach Austritt eines Brennelements aus dem Reaktorkern, mit dessen Abbrand.

Bislang wurden verschiedene Messverfahren zur Bestimmung des Grades des Abbrands von kugelförmigen Brennelementen angewandt.
Beim AVR (Arbeitsgemeinschaft Versuchsreaktor) ist aufgrund der relativ geringen Umwälzgeschwindigkeit der Brennelemente von ca. 500 /Tag eine γ-spektrometrische Messung des im Brennelement vorliegenden Cs¹³⁷ mit einem durch Flüssigstickstoff gekühlten Halbleiterdetektor möglich. Diese Messung ist nur wenig aufwendig, und liefert bei akzeptablen Messzeiten von 20 bis 40 s eine Messgenauigkeit im Bereich von ± 2% bei hochabgebrannten BE.

Beim modernen modularen Kugelhaufen-Leistungsreaktor - wie dem HTR-Modul von Siemens oder dem südafrikanischen PBMR - ist gegenüber dem AVR die Umwälzgeschwindigkeit sehr viel höher (ca. 4000 Brennelemente pro Tag) und die Abklingzeit der Brennelemente im Kugelabzugsrohr ist relativ kurz (ca. 2 Tage), so dass eine direkte Übertragung des Messverfahrens vom AVR allein aufgrund der zur Verfügung stehenden geringeren Messzeit nicht auf solche Reaktoren übertragbar ist. Eine kürzere Messzeit würde zwingend zu einem größeren Messfehler führen. Von größerer Bedeutung ist allerdings der Umstand, dass aufgrund der nur geringen Abklingzeit der Brennelemente die Auswertung der Cs¹³⁷-Linie deutlich ungenauer wird. Die hohe Aktivität der kurzlebigen Spaltprodukte wirkt sich für die γ-Messung des Cs¹³⁷ sehr störend aus, da die Auswertung der typischen 662 keV-Linie des Cs¹³⁷ durch Nachbarlinien erheblich beeinträchtigt wird. Dabei handelt es sich einerseits um die starke 658 keV-Linie des Nb⁹⁷ (effektive Halbwertszeit 16,8 h), die schwache 661 keV-Linie des Ba¹⁴⁰ (Halbwertszeit 12,8 d) und die starke 668 keV-Linie des I¹³² (effektive Halbwertszeit 76,3 h). Eine entsprechende Korrektur des gemessenen Cs¹³⁷-Signals würde daher in der Regel eine sehr aufwendige Messtechnik erfordern. Die schnelle Umwälzung in Verbindung mit einem kurzen Kugelabzugsrohr und damit einer kurzen Verweilzeit im Kugelabzugsrohr führen daher zu einer starken Beeinträchtigung der Reproduzierbarkeit der Cs-Messung. Konkrete Erfahrungen an einem realen Reaktor liegen dazu noch nicht vor. Fachleute beurteilen die erreichbare Genauigkeit sehr unterschiedlich. Nach allgemeiner Auffassung wird aber vermutet, dass bei hochabgebrannten Brennelementen ein mittlerer Fehler von ± 10 % nicht unterschritten werden kann.

Aus entsprechenden Fachkreisen wurde daher alternativ für den modernen modularen Kugelhaufen-Leistungsreaktor die einfache Messung der gesamten γ-Aktivität der Brennelemente vorgeschlagen.
Die γ-Aktivität eines bestrahlten Brennelements wird im Reaktorkern, aber auch nach Austritt aus dem Kern bei nicht zu großer Abklingzeit von den kurzlebigen Spaltprodukten dominiert. Der Beitrag der längerlebigen Spaltprodukte zur Intensität der Strahlung ist praktisch vernachlässigbar. Niedriger abgebrannte Brennelemente haben im Reaktorkern und damit auch kurz vor ihrem Austritt aus dem Kern eine höhere Leistungsproduktion als höher abgebrannte Brennelemente, und damit auch eine höhere (kurzlebige) γ-Aktivität. Der Messeffekt, d. d. der Unterschied in der γ-Strahlung zwischen einem niedrig und einem hochabgebrannten Brennelement, ist sehr groß. (Beim AVR mit seiner vergleichsweisen langen Abklingzeit der Brennelemente von im Mittel 1 Monat zeigten niedrig abgebrannte Brennelemente immer noch eine etwa 3 bis 4 mal höhere γ-Aktivität als hochabgebrannte Brennelemente.) Diese Methode ist zwar nicht sehr genau, aber sehr einfach durchzuführen und außerordentlich schnell (Messzeit ca. 1 s).

Als Stand der Technik kann heute die Kombination der Messung der gesamten γ-Aktivität und der Cs¹³⁷-Stahlung angesehen werden. Alle Brennelemente werden dabei der einfachen γ-Messung unterzogen (z. B. 1 s). Nur bei als höher abgebrannt erkannten Brennelementen, die einen γ-Aktivitätswert unterhalb eines zuvor definierten Grenzwertes aufweisen, wird die beispielsweise parallel laufende Cs¹³⁷-Messung abgewartet (ca. 10 s). Erst nach Auswertung der Cs¹³⁷-Messung wird das Ziel des Brennelements - Rückförderung oder Entnahme - festgelegt.

Aber auch bei dieser Kombinationsmethode, die für die Cs-Messung regelmäßig eine längere Messzeit erlaubt, ist bei höher abgebrannten Brennelementen mit einem größeren mittleren Fehler zu rechnen. Einschätzungen von Fachleuten auf diesem Gebiet nennen dafür eine erreichbare Genauigkeit von ± 4% bis ± 20 %.

### Aufgabe und Lösung

Die Aufgabe der Erfindung ist es, eine Messmethode für Brennelemente bereit zu stellen, mit der bei kurzer Abklingzeit eines Brennelements und in kurzer Messzeit während des Umwälzbetriebs eines Kugelhaufenreaktors ein Maß für den Abbrand eines Brennelementes bestimmt werden kann.

Ferner ist es die Aufgabe der Erfindung, eine entsprechende Vorrichtung zur Durchführung der oben genannten Messmethode zu schaffen.

Die Aufgabe der Erfindung wird gelöst durch ein Verfahren zur Bestimmung des Abbrands eines Brennelements gemäß Hauptanspruch sowie durch eine Vorrichtung zur Durchführung des Verfahrens gemäß Nebenanspruch. Vorteilhafte Ausführungsformen des Verfahrens und der Vorrichtung finden sich in den jeweils rückbezogenen Ansprüchen.

### Gegenstand der Erfindung

Die Erfindung stellt kein Messverfahren zur Bestimmung des Absolutwertes des Abbrands (z. B. in % FIMA = Fission per initial metall atoms) eines kugelförmigen Brennelements dar. Die Erfindung ist ferner auch nicht dazu vorgesehen, den Abbrand bei niedrig abgebrannten Brennelementen zu ermitteln. Diese Brennelemente lassen sich aufgrund ihrer deutlich höheren γ-Aktivität durch eine einfache γ-Messung erkennen.

Das neue und erfinderische Verfahren ist insbesondere dazu bestimmt, für solche Brennelemente, die über eine einfache γ-Messung schon als höher abgebrannt eingestuft werden, das Maß des Abbrandes besonders im Hinblick auf eine mögliche Entnahme hin näher zu spezifizieren.

Gegenstand der Erfindung ist ein Verfahren zur Messung eines Maßes für den Abbrand eines Brennelements, welches ähnlich zu dem zuvor beschriebenen Verfahren als Kombinationsmethode anzusehen ist. Die aus dem Reaktorkern ausgeschleusten Brennelemente werden einer kurzen, einfachen γ-Messung unterzogen. Durch einen zuvor festgelegten ersten Grenzwert der γ-Aktivität, werden daraufhin die vermessenen Brennelemente in niedriger oder höher abgebrannte Brennelemente unterteilt. Die als höher abgebrannt erkannten Brennelemente werden einer weiteren Messung unterzogen. Diese zweite Messung basiert auf der Vorstellung, dass in einem Brennelement bei einer Anregung mit thermischen Neutronen um so mehr Spaltungen auftreten, um so weniger abgebrannt ein Brennelement ist. Während eines Spaltprozesses wird spontan harte γ-Strahlung ausgesandt. Die Intensität an harter γ-Strahlung, insbesondere im Energiebereich oberhalb von 2 MeV, kann daher ebenfalls als Maß für den Abbrand des Brennelements angesehen werden.

Das Verfahren zur Messung verläuft dabei wie folgt. Die Brennelemente werden, beispielsweise im Rahmen der Umwälzung, aus dem Reaktorkern ausgeschleust und in eine Messposition überführt. Dort werden sie einem thermischen Neutronenfluss ausgesetzt, der zu Kernspaltungen innerhalb des Brennelements führt. Neben der γ-Aktivität der schon vorhandenen Spaltprodukte kommt es während einer Kernspaltung zusätzlich zu einer Aussendung der sogenannten Spontanstrahlung, einer harten γ-Strahlung. Diese ist im Mittel energiereicher als die γ-Strahlung der Spaltprodukte.

In einem ersten Messschritt wird mit einem ersten Detektor die gesamte γ-Aktivität des Brennelements gemessen. Diese Messung erfolgt typischerweise sehr schnell (ca. 1 s), ist aber nicht sehr genau. Diese Messung dient lediglich einer ersten Einschätzung des Abbrandes des untersuchten Brennelements. Für einen gegebenen Reaktor ergibt sich die Häufigkeit für Brennelemente mit einer bestimmten, gesamten γ-Aktivität nach einer statistischen Häufigkeitsverteilung. Dies ist u. a. davon abhängig, zu welchem Zeitpunkt die Brennelemente nach dem Austritt aus dem Reaktorkern vermessen werden. Brennelemente mit einem hohen Abbrand weisen nur noch wenig Spaltprodukte auf, so dass die Aktivität der von diesen Produkten ausgesandten γ-Strahlung gering ist. Legt man einen oberen Grenzwert für die γ-Strahlung fest, oberhalb der die vermessenen Brennelemente in jedem Fall wieder auf den Reaktorkern zurückgeführt werden, kann man so eine Vorauswahl an Brennelementen treffen, bei denen überhaupt noch eine weitere Messung abgewartet wird. Der Grenzwert kann entsprechend der Häufigkeitsverteilung festgelegt werden. Beispielsweise wird der Grenzwert derart festgelegt, dass max. 20 % aller vermessenen Brennelemente mit ihrer gemessenen Aktivität unterhalb des Grenzwertes liegen. Nur bei diesen 20 % wird dann die vorteilhaft parallel ablaufende zweite Messung abgewartet.

Der zweite Messschritt des erfindungsgemäßen Verfahrens besteht darin, mit einem entsprechenden zweiten Detektor nur die harte γ-Strahlung eines Brennelements zu ermitteln. Das erfindungsgemäße Verfahren nutzt dabei vorteilhaft den vorhandenen Reaktor als Neutronenquelle, um in dem Brennelement Kernspaltungen zu erzeugen. Ein hierfür geeigneter Detektor muss insbesondere die energiereichere Strahlung ermitteln können, vorzugsweise oberhalb von 2 MeV. Für diese energieselektive Messung ist beispielsweise die Energieauflösung eines NaI-Szintillationszählers ausreichend. Der zweite Detektor sollte auch wenigstens eine γ-Gesamtimpulsrate von mehr als 10⁷/s, insbesondere von mehr als 10⁸/s verarbeiten können.

Aufgrund der kurzen Abklingzeit der Spaltprodukte innerhalb des Brennelements überwiegt die γ-Aktivität der Spaltprodukte in der Regel die der γ-Aktivität der Spaltung deutlich. Damit das Nutzsignal der harten γ-Strahlung nicht zu sehr durch die große Aktivität der nicht so energiereichen γ-Aktivität der Spaltprodukte des Brennelements überlagert wird, können mehrere Lösungen einzeln oder in Kombination verwirklicht werden.
1. Es ist vorteilhaft, für den zweiten Messschritt einen Detektor zu verwenden, der sehr hohe Impulsraten verarbeiten kann, d. h. eine sehr gute Zeitauflösung besitzt, und so auch bei kurzer Messzeit nur geringe Fehler aufweist.
2. Ferner lässt sich das Verhältnis von energiereicher (harter) zu nicht so energiereicher γ-Strahlung zugunsten der harten Strahlung verbessern, indem man zwischen Detektor und Brennelement eine Abschirmung vorsieht, die insbesondere als energetischer Hochpassfilter wirkt, und so eine Abschwächung der auf den zweiten Detektor fallenden niederenergetischen γ-Strahlung bewirkt. Eine solche Abschirmung kann beispielsweise durch einen Bleifilter bewirkt werden.
3. Damit die zweite Messung besonders genau erfolgt, sollte der zweite Detektor vorteilhaft so eingerichtet werden, dass sein optimaler Arbeitsbereich bei den Strahlenwerten liegt, die gerade die interessierenden (höher abgebrannten) Brennelemente aussenden. Dies bedeutet aber nachteilig, dass die Strahlenwerte für niedrig abgebrannte Brennelemente deutlich höher als der optimale Arbeitsbereich des zweiten Detektors liegen. Um eine mögliche Schädigung des zweiten Detektors zu verhindern, können jedoch mehrere Maßnahmen getroffen werden. Insbesondere kann eine weitere geeignete Abschirmung dafür sorgen, dass bei der Messung von niedrig abgebrannten Brennelementen der zweite Detektor nicht überlastet wird. Oder aber der zweite Detektor wird bei Messungen von niedrig abgebrannten Brennelementen deaktiviert, was besonders einfach bei nacheinander erfolgenden Messungen 1 und 2 zu realisieren ist.
4. Die Anzahl der induzierten Kernspaltungen innerhalb des Brennelements nimmt mit zunehmendem Neutronenfluss (Messfluss) zu. Zur Erzielung eines möglichst hohen thermischen Neutronenflusses an der Messposition des Brennelements ist daher insbesondere der eigentliche Reaktorkern als Neutronenquelle geeignet. Prinzipiell sind aber auch andere Neutronenquellen geeignet.
5. Die Messposition ist vorteilhaft mit Wasser umgeben. Dadurch wird die Reaktivität der unterkritischen Messanordnung erhöht und es werden die bei den Spaltungen freiwerdenden Neutronen möglichst weitgehend für weitere Spaltungen genutzt. Die zu vermessenden Brennelemente selbst beeinflussen mit ihrem Spaltstoff die Reaktivität der Anordnung. Es kommt zu einer Verstärkung des Messeffekts.
6. Zur Steigerung der Genauigkeit für die zweite Messung können alternativ auch mehrere zweite Detektoren vorgesehen werden, dessen parallel ermittelte Zählergebnisse dann addiert werden.
7. Ferner kann vorgesehen werden, dass in mehreren Messpositionen mehrere Brennelemente gleichzeitig parallel vermessen werden. Ohne die Taktzahl der Umwälzung zu verändern, würde so mehr Messzeit für jede Messung zur Verfügung stehen, was sich regelmäßig positiv auf die Genauigkeit der Messungen auswirkt.
8. Prinzipiell könnte man auch die Zeit zwischen dem Austritt eines Brennelements aus dem Reaktorkern und seiner Messung (Zwischenzeit) vorteilhaft verlängern, da die γ-Strahlung der Spaltprodukte gemäß ihres Abklingens mit der Zeit abnimmt, die γ-Strahlung durch die induzierten Spaltungen aber davon unbeeinflusst bleibt. Dies bedingt aber nachteilig teure bauliche Veränderungen oder eine ungünstige Reaktorführung.

Das erfindungsgemäße Verfahren erlaubt es, auf einfache Weise eine sehr genaue Aussage (Fehler nur ca. 1 bis 2 %) über ein Maß des Abbrandes eines Brennelements zu erhalten. Damit ist dieses Verfahren insbesondere dazu geeignet, eine Entscheidung herbeizuführen, ob ein in einem Hochtemperaturreaktor (HTR) umgewälztes Brennelement aus dem Reaktorkreislauf ausgeschleust oder wieder auf den Reaktorkern zurückgeführt werden soll. Das Verfahren unterstützt diese Entscheidungsfindung dabei vorteilhaft wie folgt:
a) ein Brennelement wird aus dem Reaktor entfernt und in eine Messposition überführt,
b) das Brennelement wird einem thermischen Neutronenfluss ausgesetzt,
c) ein erster Detektor ermittelt die vom Brennelement ausgesandte γ-Strahlung,
d) bei Überschreiten eines vorher festgelegten ersten Grenzwertes wird das Brennelement direkt wieder dem Reaktor zugeführt, bei Unterschreiten des Grenzwertes schließen sich für das Brennelement die Schritte e bis f an,
e) ein zweiter Detektor ermittelt die vom Brennelement ausgesandte hochenergetische γ-Strahlung oberhalb von 1 MeV,
f) bei Überschreiten eines vorher festgelegten zweiten Grenzwertes wird das Brennelement dem Reaktor zugeführt, bei Unterschreiten des Grenzwertes wird das Brennelement aus dem Brennelementkreislauf ausgeschleust.

### Spezieller Beschreibungsteil

Nachfolgend wird der Gegenstand der Erfindung anhand eines Ausführungsbeispiels und einer Figur näher erläutert, ohne dass der Gegenstand der Erfindung dadurch beschränkt wird.

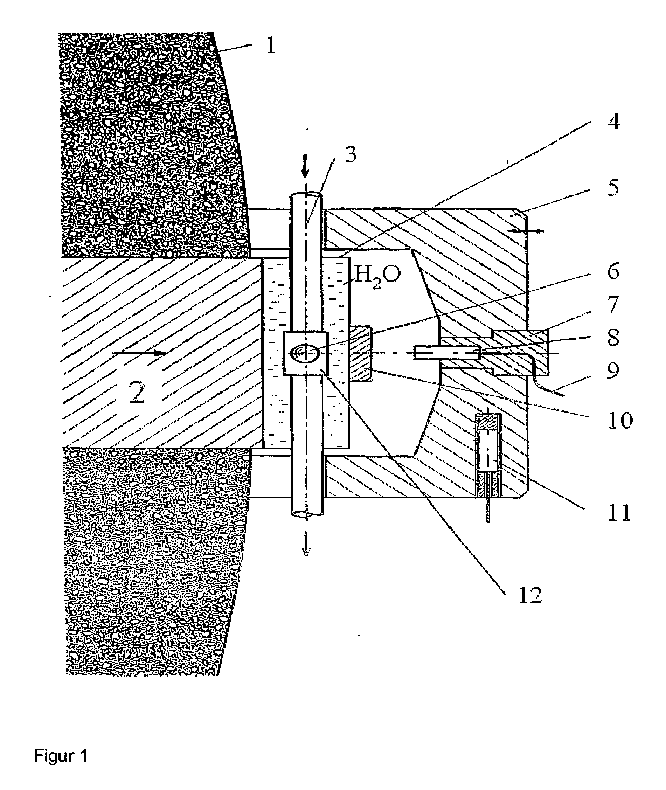

Die Figur zeigt im Horizontalschnitt eine Ausführungsform einer Vorrichtung zur Durchführung des erfindungsgemäßen Verfahrens. Darin bedeuten:
- 1: Reaktor, Außenseite des biologischen Schilds
- 2: thermische Säule (Graphit) mit thermischem Neutronenfluss
- 3: Kugelleitung
- 4: Wassertank
- 5: biologische Abschirmung
- 6: Brennelement in Messposition
- 7: Stopfen für Detektorwechsel
- 8: energieselektiver zweiter γ-Detektor mit hoher Zeitauflösung
- 9: Anschlusskabel zur Impulsverarbeitung
- 10: Detektorabschirmung und Energiefilter, z. B. aus Blei
- 11: erster γ-Detektor
- 12: Bauteil der Umwälzanlage (schematisch) mit Fixierung eines Brennelements in der Messposition

Das erfindungsgemäße Verfahren wird dabei in einer Vorrichtung wie folgt durchgeführt:

Das aus dem Reaktorkern ausgeschleuste, zu vermessende Brennelement ***6*** wird in eine definierte Messposition ***12*** gebracht, in der es einem thermischen Neutronenfluss ***2*** ausgesetzt ist. In Abhängigkeit vom Abbrand, bzw. dem im Brennelement ***6*** noch enthaltenen Spaltstoff kommt es innerhalb des Brennelements zu Kernspaltungen, deren Intensität messtechnisch erfasst werden. Die Messgröße ist dabei die harte, hochenergetische γ-Strahlung, die von den bei der Messung erzeugten Spaltprodukten unmittelbar nach dem Spaltvorgang ausgesandt wird (Spontanstrahlung). Es wird dabei ausgenutzt, dass die Energie dieser harten γ-Strahlung im Mittel höher ist, als die von den im Brennelement vorhandenen Spaltprodukten ausgesandte γ-Strahlung. Damit kann die harte, energiereiche γ-Strahlung von energieselektiven γ-Messgeräten erfasst werden. Ein geeignetes Detektionssystem ist beispielsweise ein hochauflösender Szintillationszähler mit hoher Zeitauflösung ***8***, dessen Energieauflösung hierfür ausreichend ist.

Der geringe höherenergetische Anteil der γ-Strahlung der Spaltprodukte im Brennelement, der in den Bereich der zu messenden harten γ-Strahlung fällt, kann ohne großen Einfluss auf die Messgenauigkeit mit gemessen werden, da die gesamte γ-Strahlung des zu messenden Brennelements ebenfalls vom Abbrand abhängig ist und zwar in der gleichen Weise. Je höher der Abbrand, um so geringer der Spaltstoffgehalt, um so geringer die Spalttätigkeit bei der Messung, um so geringer die harte γ-Strahlung, um so geringer aber auch die gesamte Brennelement-Aktivität. (Auf die Möglichkeit der einfachen Messung der gesamten γ-Strahlung des Brennelements als Messverfahren wurde oben bereits einleitend hingewiesen.)

Die beiden bislang aufgeführten Merkmale kennzeichnen das Prinzip des neuen Verfahrens. Hauptschwierigkeit des Verfahrens ist, dass aufgrund der nur kurzen Abklingzeit der BE (typischerweise 2 Tage) deren γ-Aktivität sehr groß ist (Störsignal), der gegenüber die harte γ-Strahlung als Nutzsignal völlig in den Hintergrund tritt. Um trotzdem die oben genannte gewünschte Messgenauigkeit zu erreichen, d. h. in kurzer Messzeit eine von der Zählstatistik her genügend große Zahl von Nutzimpulsen zu akkumulieren, sind die folgenden weiteren Merkmale des Verfahrens ebenfalls sehr wichtig.

Es wird ein γ-Messgerät ***8*** (zweiter Detektor) benutzt, welches sehr hohe Impulsraten verarbeiten kann, also eine sehr gute Zeitauflösung besitzt. Die Abschirmung ***10*** zwischen dem Messgerät ***8*** und dem zu messenden Brennelement 6 wird so ausgelegt, dass das Messgerät bei einem höher abgebrannten Brennelement, d. h. mit einem vergleichsweise schwach strahlenden Brennelement, bereits im Bereich seiner maximalen Zählmöglichkeiten arbeitet. Stärker strahlende, noch unzureichend abgebrannte Brennelemente können mit diesem zweiten Detektor ***8*** dann nicht mehr detektiert werden. Diese werden aber im Sinne der schon beschriebenen Kombinationsmethode mit Hilfe der einfachen γ-Messung mit Hilfe des ersten Detektors ***11*** erkannt.

Die notwendige Abschirmung ***10*** zwischen Brennelement ***6*** und Messgerät ***8*** (zweiter Detektor) wird in Blei ausgeführt, um eine möglichst große Wirkung als Energiefilter zu erzielen (bevorzugter Durchlass von harter γ-Strahlung) .

Der Verbrauch an Spaltstoff für die Messung ist infolge der kurzen Messzeit auch bei sehr hohem Neutronenfluss (Messfluss) vollkommen vernachlässigbar. Im Interesse einer guten Messgenauigkeit des Verfahrens kann daher mit einem möglichst hohen Messfluss gearbeitet werden. Es wird deshalb keine externe Neutronenquelle verwendet, sondern vorteilhaft der Reaktorkern selber als Neutronenlieferant genutzt. Dazu erhält der Reaktor ähnlich wie bei Forschungsreaktoren, z. B. dem Dido bei der Forschungszentrum Jülich GmbH, eine "thermische Säule" *2*, d. h. eine möglichst nur vom Reaktorbehälter unterbrochene radial verlaufende durchgehende Graphitverbindung zwischen dem Seitenreflektor und der Außenseite des biologischen Schildes, möglichst auf Höhe Reaktorkernmitte. Unmittelbar vor der äußeren Stirnfläche des Graphits befindet sich die Messposition ***12.*** Diese Messposition ***12*** ist darüber hinaus vorteilhaft von Wasser ***4*** umgeben. Dadurch wird die Reaktivität der unterkritischen Messanordnung erhöht und es werden die bei den Spaltungen freiwerdenden Neutronen möglichst weitgehend für weitere Spaltungen genutzt. Die zu messenden Brennelemente selbst beeinflussen mit ihrem Spaltstoffgehalt die Reaktivität der Anordnung. Es kommt zu einer Verstärkung des Messeffekts.

Im Hinblick auf die praktische Ausführung wird die Messposition ***12*** günstiger Weise in einem Bauteil der Kugelbeschickungsanlage ***3*** untergebracht, in dem die Kugeln ohnehin angehalten werden. Hierfür bietet sich insbesondere die Kugelförderweiche an, mit der das gewünschte Ziel der gemessenen Kugel (auf den Kugelhaufen oder in die Kugelentnahme) angesteuert wird. Die Anordnung der Förderweiche auf Höhe Reaktorkernmitte (vor der "thermischen Säule") bietet darüber hinaus den Vorteil, dass der lange Höhenförderweg der Kugeln aus dem Bereich des unteren Endes des Kugelabzugrohrs bis zum oberen Umkehrpunkt des auf den Kugelhaufen führenden Förderrohrs (oder Förderrohre) in 2 Teilstrecken aufgeteilt wird und so die einzelnen pneumatischen Kugelfördervorgänge mit weniger Fördergasdruck und -menge auskommen.

Zur gesamten Messanordnung gehört auch eine biologische Abschirmung *5*, die die Messanordnung umgibt, sowie ein weiterer γ-Detektor ***11***. Dieser Detektor ist so angeordnet, dass er bei einem niedrig abgebrannten Brennelement (z. B. nach einem Coredurchlauf) in der Messposition ***12*** bei hoher Zählrate arbeitet. Mit diesem Detektor ***11*** werden alle durch die Messposition geschleusten Brennelemente (und sonstigen Kugeln) im Sinne der oben einleitend erwähnten Kombinationsmethode auf ihre γ-Aktivität hin gemessen. Überschreitet das Messergebnis dieses Detektors ***11*** einen bestimmten Grenzwert, ist das gemessene Brennelement noch ungenügend abgebrannt und wird ohne weiteres Abwarten der zweiten Messung auf den Reaktorkern zurückgefördert. Bei Unterschreitung des Grenzwerts wird die Messung des Brennelements auch mit Detektor ***8*** abgewartet und danach erst das Kugelziel (Entnahme oder Rückfördern) festgelegt. Dies geschieht wieder durch Vergleich des Messergebnisses mit einem weiteren Grenzwert. Bei Grenzwertunterschreitung wird das Brennelement entnommen.

Die beiden Grenzwerte können aus den Häufigkeitsverteilungen der Messergebnisse einer größeren Zahl zuvor gemessener Brennelemente (z. B. 300) ermittelt werden. Diese Anzahl ist gleich dem Flächeninhalt unter der Verteilungskurve. Zur Grenzwertermittlung wird auf der Messwertskala derjenige Wert aufgesucht, der die Verteilungsfläche in einem bestimmten vorgegebenen Zahlenverhältnis aufteilt. Wird z. B. vorgegeben, dass 20 % aller gemessenen Brennelemente auch mit dem zweiten Detektor ***8*** gemessen werden sollen, wird die Verteilungsfläche der Messergebnisse des ersten Detektors ***11*** im Verhältnis 2:8 aufgeteilt. 20 % aller Messergebnisse liegen dann unterhalb des ersten Grenzwertes. Wird nun weiterhin angenommen, dass der Reaktor in der Fahrweise 1:10 betrieben wird, d. h., dass pro frisch zugegebenem Brennelement 10 umgewälzt werden und damit auch - jedenfalls im längerfristigen Mittel - aus den 10 umgewälzten 1 Brennelement entnommen werden muss, der Entnahmeanteil also 10 % beträgt, wird in der Häufigkeitsverteilung der Messergebnisse des zweiten Detektors ***8*** derjenige Wert aufgesucht, der die Verteilungsfläche in zwei gleichgroße Hälften teilt. Die Brennelemente, deren Messergebnisse unter diesen zweiten Grenzwert fallen, werden entnommen. Der Entnahmeanteil ist dann 10 %, so wie es die 1:10-Fahrweise verlangt. Die Häufigkeitsverteilungen und damit auch die Grenzwertberechnungen können nach jeder Brennelement-Messung aktualisiert werden. Bei einer Änderung der Reaktorleistung werden die Messergebnisse vor ihrer Verarbeitung mit dem Verhältnis aus neuer zu vorheriger Leistung multipliziert.

Sollte der zweite Detektor 10 in eingeschaltetem Zustand durch eine Übersättigung mit γ-Strahlen Schaden nehmen können, werden vorteilhaft beide Messungen nicht parallel gestartet, sondern es wird zunächst nur die γ-Strahlung mit dem ersten Detektor ***11*** gemessen. Nur wenn das Messergebnis den ersten Grenzwert unterschreitet wird dann beispielsweise die Arbeitsspannung des zweiten Detektors ***8*** aufgeschaltet.

Es sei noch angemerkt, dass die Messung nicht unbedingt wie in der Figur gezeigt, vor dem biologischen Schild ***1*** angeordnet werden muss. Sie kann auch in einer Einbuchtung des biologischen Schildes untergebracht werden. Hierdurch verkürzt sich die "thermische Säule" und der Messfluss ***2*** ist größer. Möglicherweise kann sogar direkt an der Außenseite des Reaktordruckbehälters gemessen werden. Der zweite Detektor ***8*** ist dann natürlich stärker der γ-Strahlung des Reaktorkerns ausgesetzt. Ein hoher Messfluss ***2*** ist aber für die Genauigkeit des Verfahrens so bedeutsam, dass ein in diesem Fall mit gemessener konstanter γ-Untergrund in Kauf genommen werden kann, solange er nicht dominant ist.

## Patentansprüche

1. Verfahren zur Messung einer relativen Größe des Abbrandes eines Brennelements, mit den Schritten
a) ein Brennelement (6) wird aus dem Reaktor entfernt und in eine Messposition (12) überführt,
b) das Brennelement (6) wird einem Neutronenfluss (2) ausgesetzt, so dass Kernspaltung innerhalb des Brennelements auftritt
c) ein erster Detektor (11) ermittelt die gesamte von diesem Brennelement ausgesandte γ-Strahlung,
d) bei Überschreiten eines ersten vorgegebenen Grenzwertes, wird das Brennelement wieder dem Reaktor zugeführt, bei Unterschreiten des ersten Grenzwertes schließen sich für das Brennelement die Schritte e) bis f) an,
e) ein zweiter Detektor (8) ermittelt die vom Brennelement ausgesandte hochenergetische γ-Strahlung oberhalb von 1 MeV,
f) bei Überschreiten eines vorgegebenen zweiten Grenzwertes wird das Brennelement dem Reaktor zugeführt, bei Unterschreiten des zweiten Grenzwertes wird das Brennelement aus dem Brennelementkreislauf ausgeschleust.

2. Verfahren nach vorhergehendem Anspruch 1, bei dem der zweite Detektor (8) die von diesem Brennelement ausgesandte hochenergetische γ-Strahlung oberhalb von 2 MeV ermittelt.

3. Verfahren nach Anspruch 1 bis 2, bei dem der zweite Detektor (8) mit einer Zählrate von wenigstens 10⁷/s, insbesondere von wenigstens 10⁸/s eingesetzt wird.

4. Verfahren nach Anspruch 1 bis 3, bei dem ein Szintillationszähler als zweiter Detektor (8) eingesetzt wird.

5. Verfahren nach Anspruch 1 bis 4, bei dem zwischen der Messposition (12) und dem Detektor (8) eine Abschirmung vorgesehen ist.

6. Verfahren nach Anspruch 5, bei dem zwischen der Messposition (12) und dem Detektor (8) ein Bleifilter als Abschirmung vorgesehen ist.

7. Verfahren nach einem der Ansprüche 1 bis 6, bei dem der erste Detektor (11) die γ-Strahlung des Brennelements (6) in weniger als 2 Sekunden ermittelt.

8. Verfahren nach einem der Ansprüche 1 bis 7, bei dem der zweite Detektor (8) die hochenergetische γ-Strahlung des Brennelements (6) in weniger als 30 Sekunden, insbesondere in weniger als 10 s ermittelt.

9. Verfahren nach einem der Ansprüche 1 bis 8, bei dem das Brennelement (6) in der Messposition von Wasser umgeben ist.

10. Verfahren nach einem der Ansprüche 1 bis 9, bei dem der erste Grenzwert für die erste γ-Messung derart festgelegt wird, dass ein zur Reaktorfahrweise passender Anteil der Brennelemente diesen Grenzwert unterschreitet.

11. Verfahren nach einem der Ansprüche 1 bis 10, bei dem der erste Grenzwert für die erste γ-Messung derart festgelegt wird, dass bei einer 1:10 Fahrweise des Reaktors maximal 20 %, insbesondere maximal 15 % der Brennelemente diesen Grenzwert unterschreiten.

12. Verfahren nach einem der vorhergehenden Ansprüche 1 bis 11, bei dem der zweite Grenzwert für die zweite Messung derart festgelegt wird, dass ein zur Reaktorfahrweise passender Anteil aller vermessenen Brennelemente diesen Grenzwert unterschreitet.

13. Verfahren nach einem der vorhergehenden Ansprüche 1 bis 12, bei dem der zweite Grenzwert für die zweite Messung derart festgelegt wird, dass bei einer 1:10 Fahrweise des Reaktors maximal 15 %, insbesondere maximal 10% aller vermessenen Brennelemente diesen Grenzwert unterschreiten.

14. Vorrichtung zur Durchführung des Verfahrens gemäß einem der Ansprüche 1 bis 13 mit
a) einer Neutronenquelle, die einen thermischen Neutronenfluss (2) erzeugt,
b) einer Messposition 12 zur Fixierung eines zu vermessenden Brennelements, so dass das Brennelement dem thermischen Neutronenfluss ausgesetzt ist,
c) einem ersten Detektor (11), der die gesamte von diesem Brennelement (6) ausgesandte γ-Strahlung (6) zu messen vermag, und
d) einem zweiten Detektor 8, der die vom diesem Brennelement (6) ausgesandte hochenergetische γ-Strahlung (6) oberhalb von 1 MeV zu messen vermag.

15. Vorrichtung nach vorhergehendem Anspruch 14 mit einer Abschirmung (10) zwischen der Messposition (12) und dem weiteren Detektor (8).

16. Vorrichtung nach Anspruch 15 mit einem Bleifilter als Abschirmung (10).

17. Vorrichtung nach einem der vorhergehenden Ansprüche 14 bis 16 mit einem Szintillationszähler als weiterem Detektor (8).

18. Vorrichtung nach einem der vorhergehenden Ansprüche 14 bis 17 mit einem weiteren Detektor (8), der eine Zählrate von wenigstens 10⁷/s, insbesondere von wenigstens 10⁸/s aufweist.

19. Vorrichtung nach einem der vorhergehenden Ansprüche 14 bis 18, bei dem die Messposition (12) zumindest teilweise von Wasser umgeben ist.

## Claims

1. Method for measuring the relative extent of burnout of combustion elements with the steps
a) a combustion element (6) is taken from the reactor and transferred to a measuring position (12),
b) the combustion element (6) is exposed to a neutron flux (2) so that nuclear fission occurs inside the combustion element
c) a first detector (11) establishes the whole of the γ radiation emitted by this combustion element,
d) when a first preset limit value is exceeded, the combustion element is applied to the reactor again, when the first limit value is not reached steps e) to f) follow for the combustion element,
e) a second detector (8) establishes the high energy γ radiation above 1 MeV emitted by the combustion element,
f) if a preset second limit value is exceeded, the combustion element is taken to the reactor, if the second limit value is not reached the combustion element is locked out of the combustion element circuit.

2. Method according to the foregoing claim 1, in which the second detector (8) establishes the high energy γ radiation above 2 MeV emitted by this combustion element.

3. Method according to claim 1 to 2, in which the second detector (8) is used with a measuring rate of at least 10⁷/s, particularly at least 10⁸/s.

4. Method according to claim 1 to 3, in which a scintillation counter is used as a second detector (8).

5. Method according to claim 1 to 4, in which shielding is provided between the measuring position (12) and the detector (8).

6. Method according to claim 5, in which a lead filter is provided as shielding between the measuring position (12) and the detector (8).

7. Method according to one of claims 1 to 6, in which the first detector (11) establishes the γ radiation of the combustion element (6) in less than 2 seconds.

8. Method according to one of claims 1 to 7, in which the second detector (8) establishes the high energy γ radiation of the combustion element (6) in less than 30 seconds, particularly less than 10 s.

9. Method according to one of claims 1 to 8, in which the combustion element (6) is surrounded by water in the measuring position.

10. Method according to one of claims 1 to 9, in which the first limit value for the first γ measurement is set in such a way that a proportion of the combustion elements appropriate for the reactor operation mode falls below this limit value.

11. Method according to one of claims 1 to 10, in which the first limit value for the first γ measurement is set in such a way that with the reactor operation mode at 1:10 a maximum of 20%, particularly a maximum of 15% of the combustion elements fall below this limit value.

12. Method according to one of the foregoing claims 1 to 11, in which the second limit value for the second measurement is set in such a way that a proportion of all the combustion elements appropriate for the reactor operation mode falls below this limit value.

13. Method according to one of the foregoing claims 1 to 12, in which the second limit value for the second measurement is set in such a way that with the reactor operation mode at 1:10 a maximum of 15%, particularly a maximum of 10% of all measured combustion elements fall below this limit value.

14. Device for carrying out the method according to one of claims 1 to 13 with
a) a neutron source, which produces a thermal neutron flux (2),
b) a measuring position 12 for fixing a combustion element to be measured, so that the combustion element is exposed to the thermal neutron flux,
c) a first detector (11), which allows the whole of the γ radiation (6) emitted by this combustion element (6) to be measured and
d) a second detector 8, which allows the high energy γ radiation (6) above 1 MeV emitted by this combustion element (6) to be measured.

15. Device according to the foregoing claim 14 with shielding (10) between the measuring position (12) and the other detector (8).

16. Device according to claim 15 with a lead filter as shielding (10).

17. Device according to one of the foregoing claims 14 to 16 with a scintillation counter as another detector (8).

18. Device according to one of the foregoing claims 14 to 17 with another detector (8), which has a measuring rate of at least 10⁷/s, particularly at least 10⁸/s.

19. Device according to one of the foregoing claims 14 to 18, in which the measuring position (2) is surrounded at least partly by water.

## Revendications

1. Procédé de mesure d'une grandeur relative de la combustion d'un élément combustible, comportant les étapes suivantes:
a) un élément combustible (6) est retiré du réacteur et amené vers une position de mesure (12),
b) l'élément combustible (6) est exposé à un flux de neutrons (2) de manière à provoquer une fission nucléaire à l'intérieur de l'élément combustible
c) un premier détecteur (11) détermine le rayonnement γ total émis par cet élément combustible,
d) en cas de dépassement d'une première valeur limite prescrite, l'élément combustible est retourné au réacteur, les étapes e) à f) étant ajoutées pour l'élément combustible si la première valeur limite n'est pas atteinte,
e) un deuxième détecteur (8) détermine le rayonnement γ hautement énergétique supérieur à 1 MeV émis par l'élément combustible,
f) en cas de dépassement d'une deuxième valeur limite prescrite, l'élément combustible est conduit vers le réacteur, l'élément combustible étant éclusé au dehors du circuit d'élément combustible si la deuxième valeur limite n'est pas atteinte.

2. Procédé selon la revendication 1 précédente, où le deuxième détecteur (8) détermine le rayonnement γ hautement énergétique supérieur à 2 MeV émis par cet élément combustible.

3. Procédé selon les revendications 1 et 2, où le deuxième détecteur (8) est mis en service avec une fréquence de comptage de 10⁷/ s au moins, notamment de 10⁸/s au moins.

4. Procédé selon les revendications 1 à 3, où un compteur à scintillations est utilisé comme deuxième détecteur (8).

5. Procédé selon les revendications 1 à 4, où un blindage est prévu entre la position de mesure (12) et le détecteur (8).

6. Procédé selon la revendication 5, où un filtre en plomb est prévu comme blindage entre la position de mesure (12) et le détecteur (8).

7. Procédé selon l'une des revendications 1 à 6, où le premier détecteur (11) détermine le rayonnement γ de l'élément combustible (6) en moins de 2 secondes.

8. Procédé selon l'une des revendications 1 à 7, où le deuxième détecteur (8) détermine le rayonnement γ hautement énergétique de l'élément combustible (6) en moins de 30 secondes, notamment en moins de 10 s.

9. Procédé selon l'une des revendications 1 à 8, où l'élément combustible (6) est entouré d'eau en position de mesure.

10. Procédé selon l'une des revendications 1 à 9, où la première valeur limite pour la première mesure γ est fixée en sorte que cette valeur limite ne soit pas atteinte par une partie des éléments combustibles appropriée au fonctionnement du réacteur.

11. Procédé selon l'une des revendications 1 à 10, où la première valeur limite pour la première mesure γ est fixée en sorte que cette valeur limite ne soit pas atteinte par au maximum 20 %, notamment au maximum 15 % des éléments combustibles pour un fonctionnement du réacteur à 1:10.

12. Procédé selon l'une des revendications 1 à 11 précédentes, où la deuxième valeur limite pour la deuxième mesure γ est fixée en sorte que cette valeur limite ne soit pas atteinte par une part de tous les éléments combustibles mesurés, appropriée au fonctionnement du réacteur.

13. Procédé selon l'une des revendications 1 à 12 précédentes, où la deuxième valeur limite pour la deuxième mesure est fixée en sorte que cette valeur limite ne soit pas atteinte par au maximum 15 %, notamment au maximum 10 % de tous les éléments combustibles mesurés pour un fonctionnement du réacteur à 1:10.

14. Dispositif pour l'exécution du procédé selon l'une des revendications 1 à 13, avec
a) une source de neutrons générant un flux de neutrons thermiques (2),
b) une position de mesure (12) pour la fixation d'un élément combustible à mesurer, de manière à exposer l'élément combustible au flux de neutrons thermiques,
c) un premier détecteur (11) permettant de mesurer la totalité du rayonnement γ (6) émis par cet élément combustible (6), et
d) un deuxième détecteur (8) permettant de mesurer le rayonnement γ (6) hautement énergétique supérieur à 1 MeV émis par cet élément combustible (6).

15. Dispositif selon la revendication 14 précédente, avec un blindage (10) entre la position de mesure (12) et le deuxième détecteur (8).

16. Dispositif selon la revendication 15 avec un filtre en plomb comme blindage (10).

17. Dispositif selon l'une des revendications 14 à 16 précédentes, avec un compteur à scintillations comme autre détecteur (8).

18. Dispositif selon l'une des revendications 14 à 17 précédentes, avec un autre détecteur (8), présentant une fréquence de comptage de 10⁷/s au moins, notamment de 10⁸/s au moins.

19. Dispositif selon l'une des revendications 14 à 18 précédentes, où la position de mesure (12) est au moins partiellement entourée d'eau.
